(19) Europäisches Patentamt
European Patent Office
Office européen des brevets

(11) EP 2 230 538 B1

## (12) EUROPÄISCHE PATENTSCHRIFT

(45) Veröffentlichungstag und Bekanntmachung des Hinweises auf die Patenterteilung:
**23.05.2012 Patentblatt 2012/21**

(51) Int Cl.:
***G01V 8/20*** *(2006.01)*

(21) Anmeldenummer: **09003759.9**

(22) Anmeldetag: **16.03.2009**

(54) **Verfahren zum Betreiben einer optoelektronischen Sensoranordnung**

Method for operating an optoelectronic sensor assembly

Procédé de fonctionnement d'un agencement de capteur optoélectronique

(84) Benannte Vertragsstaaten:
**AT BE BG CH CY CZ DE DK EE ES FI FR GB GR HR HU IE IS IT LI LT LU LV MC MK MT NL NO PL PT RO SE SI SK TR**

(43) Veröffentlichungstag der Anmeldung:
**22.09.2010 Patentblatt 2010/38**

(73) Patentinhaber: **SICK AG**
**79183 Waldkirch/Breisgau (DE)**

(72) Erfinder:
• **Plate, Hans-Ulrich**
**79106 Freiburg (DE)**

• **Szerbakowski, Boris**
**79183 Waldkirch (DE)**
• **Natzkowski, Carsten**
**79108 Freiburg (DE)**

(74) Vertreter: **Manitz, Finsterwald & Partner GbR**
**Postfach 31 02 20**
**80102 München (DE)**

(56) Entgegenhaltungen:
**EP-A2- 1 118 881    WO-A2-2006/044758**
**DE-A1- 1 566 741    DE-A1- 2 539 438**
**DE-A1- 3 134 815    DE-A1- 19 832 673**
**GB-A- 2 423 241    US-A- 5 689 335**
**US-B1- 6 777 684**

**Beschreibung**

Die vorliegende Erfindung betrifft ein Verfahren zum Betreiben einer optoelektronischen Sensoranordnung mit mehreren Lichtsendern, die vorzugsweise wenigstens ein Lichtgitter umfasst, sowie eine optoelektronische Sensoranordnung, mit der ein solches Verfahren durchgeführt werden kann.

Es ist bekannt, Lichtgitter vom gleichen Typ parallel zu betreiben, wobei die Sender eines Lichtgitters Lichtpulse in einer vorgegebenen, zeitlichen Abfolge aussenden, die eine Codierung darstellt.

Aus EP 1 118 881 B1 ist ein Verfahren zum Betreiben einer optoelektronischen Sensoranordnung, insbesondere einer Lichtschranke oder eines Lichtgitters, bekannt, bei dem ein Sender nacheinander jeweils einen zeitlichen Abstand aufweisende Lichtpulse aussendet, wobei die Amplitude der Lichtpulse jeweils mit einem Wechsellichtsignal moduliert wird. Die Modulation der Lichtpulse mit dem Wechsellichtsignal dient der Unterscheidung der von den Lichtsendern gesendeten Lichtpulse von eventuell vorhandenen Störlichtsendern und somit der Störfestigkeit der optoelektronischen Sensoranordnung.

Bei der Verwendung von zeitlichen Pulsabfolgen als Codierungen ist die Ansprechzeit eines entsprechenden Lichtgitters aufgrund der zeitlichen Verschachtelung der Codes erhöht, insbesondere wenn mehrere Lichtgitter parallel betrieben werden.

DE 1 566 741 A1 offenbart ein Verfahren zum Betreiben einer optoelektronischen Sensoranordnung gemäß dem Oberbegriff des Anspruchs 1.

DE 25 39 438 A1 offenbart eine Strahlenschranke zur Überwachung eines Überwachungsraums. Um bei der Verwendung mehrere Sender und Empfänger die Beeinflussung eines Empfängers durch mehrere Sender auszuschließen, schlägt D2 vor, dass jeder Sender eine von den anderen um einen geringen Betrag abweichende Frequenz hat.

GB 2 423 241 A offenbart ein Lichtgitter mit mehreren Sendern und mehreren Empfängern, bei dem die Strahlung der Sender so sein kann, dass die Empfänger zwischen einem und einem anderen Sender unterscheiden können, beispielsweise dadurch, dass die Strahlung auf unterschiedliche Arten moduliert wird oder dass die Strahlung verschiedene Wellenlängen aufweist.

WO 2006/044758 A2 offenbart eine optoelektronische Sensoranordnung mit einem Sendermodul und einem Empfängermodul sowie mit einer in einem field programmable gate array, FPGA, enthaltenen Schaltung zum Steuern des Sendermoduls und zum Verarbeiten der Signale des Empfängermoduls, wobei das gate array ein lokales Oszillatorsignal erzeugt das mit den Empfängersignalen in einem analogen Mischer kombiniert wird, um ein Zwischenfrequenzsignal zu erzeugen. Ein Tiefpassfilter und Verstärker/Begrenzer werden verwendet, um das Zwischenfrequenzsignal weiter aufzubereiten, so dass der Ausgang des Verstärkers/Begrenzers ein Erkennung/Keine-Erkennung Erkennungssignal liefert, das von einem Mikroprozessor verarbeitet werden kann.

Der vorliegenden Erfindung liegt die Aufgabe zugrunde, ein Verfahren zum Betreiben einer optischen Sensoranordnung, die vorzugsweise wenigstens ein Lichtgitter umfasst, zu schaffen, bei dem mehrere Lichtsender parallel betrieben werden und eine erhöhte Störsicherheit ermöglicht wird, sowie eine entsprechende optoelektronische Sensoranordnung mit mehreren Lichtsendern anzugeben.

Diese Aufgabe wird durch ein Verfahren mit den Merkmalen des Anspruchs 1 bzw. eine optoelektronische Sensoranordnung mit den Merkmalen des Anspruchs 7 gelöst. Vorteilhafte Ausgestaltungen der Erfindung sind in den Unteransprüchen, der Beschreibung und den Zeichnungen beschrieben.

Erfindungsgemäß senden mehrere Lichtsender jeweils wenigstens ein Lichtsignal in einen Überwachungsbereich aus, wobei das wenigstens eine von einem Lichtsender ausgesendete Lichtsignal eine dem jeweiligen Lichtsender zugeordnete Grundmodulationsfrequenz aufweist, die von der Grundmodulationsfrequenz von dem wenigstens einen Lichtsignal wenigstens eines anderen Lichtsenders verschieden ist. Das wenigstens eine Lichtsignal eines Lichtsenders wird jeweils von wenigstens einem dem Lichtsender zugeordneten Lichtempfänger empfangen. Das Empfangssignal des wenigstens einen Lichtempfängers wird von einer dem wenigstens einen Lichtempfänger zugeordneten Auswerteeinrichtung ausgewertet. Von der Auswerteeinrichtung wird in Abhängigkeit des Empfangssignals oder der Empfangssignale ein Objekt-Feststellungssignal erzeugt und gegebenenfalls abgegeben. Das Objekt-Feststellungssignal kann beliebig weiterverarbeitet werden und beispielsweise dazu dienen, ein Warnsignal zu erzeugen oder eine Maschine zu stoppen.

Dadurch, dass die Grundmodulationsfrequenz eines von einem Lichtsender gesendeten Lichtsignal sich von der Grundmodulationsfrequenz eines anderen Lichtsenders unterscheidet, kann eine Auswerteeinrichtung feststellen, ob der Lichtsignalweg von einem Lichtsender zu einem Lichtempfänger unterbrochen ist, ohne dass diese Auswertung durch einen zweiten Lichtsender gestört werden kann, der den Lichtempfänger möglicherweise bestrahlt, da die Lichtsender bzw. von ihnen gesendete Lichtsignale aufgrund der unterschiedlichen Grundmodulationsfrequenzen voneinander unterschieden werden können.

Alle Lichtsender der optoelektronischen Sensoranordnung können hierbei voneinander verschiedene Grundmodulationsfrequenzen aufweisen. Es können aber auch eine oder mehrere Gruppen von Lichtsendern identische Grundmodulationsfrequenzen aufweisen.

Eine Codierung der Lichtsender findet insofern über die dem jeweiligen Sender zugeordnete Grundmodulationsfrequenz statt. Da die Grundmodulationsfrequenz zur Unterscheidung von Lichtsendern bzw. der Zuordnung von Lichtsendern zu Gruppen dient, ist die Ansprechzeit der optoelektronischen Sensoranordnung auch bei parallelem Betrieb einer Vielzahl von Lichtsendern nicht erhöht.

Im Falle einer Filterung des Empfangssignals des wenigstens einen Lichtempfängers durch die Auswerteeinrichtung ist die Ansprechzeit der optoelektronischen Sensoranordnung auf diese Weise beispielsweise lediglich durch die Einschwingzeit von verwendeten Filtern beschränkt.

Erfindungsgemäß ist jedem Lichtsender wenigstens ein Lichtempfänger zugeordnet, von dem ein Lichtsignal des jeweiligen Lichtsenders empfangbar ist. Der Begriff "empfangbar" soll dabei so verstanden werden, dass der jeweilige Lichtsender und der Lichtempfänger so angeordnet und ausgestaltet sind, dass der Lichtempfänger in Abwesenheit eines Objekts in dem Überwachungsbereich ein von dem Lichtsender gesendetes Lichtsignal empfangen kann. Hierbei kann der Lichtsender direkt in Richtung des Lichtempfängers ausgerichtet sein oder es können ein oder mehrere Reflexionsobjekte vorgesehen sein, die von dem Lichtsender gesendetes Licht zum Lichtempfänger reflektieren, remittieren oder zurückstreuen.

Die optoelektronische Sensoranordnung kann einen Lichtempfänger oder mehrere Lichtempfänger aufweisen. Jedem Lichtsender können mehrere Lichtempfänger zugeordnet sein, von denen das wenigstens eine Lichtsignal des jeweiligen Lichtsenders empfangbar ist. Ein Lichtempfänger kann auch mehreren Lichtsendern zugeordnet sein, deren Lichtsignale von dem jeweiligen Lichtempfänger empfangbar sind. Vorzugsweise ist jedem Lichtsender genau ein Lichtempfänger und jedem Lichtempfänger genau ein Lichtsender zugeordnet.

Erfindungsgemäß ist jedem Lichtempfänger wenigstens eine Auswerteeinrichtung zugeordnet. Hierbei können prinzipiell eine beliebige Anzahl von Auswerteeinrichtungen und eine beliebige Zuordnung von Lichtempfängern zu Auswerteeinrichtungen vorgesehen sein. Beispielsweise kann eine Auswerteeinrichtung die Empfangssignale aller Lichtempfänger auswerten oder es kann jedem Lichtempfänger eine eigene Auswerteeinrichtung zugeordnet sein, die das Empfangssignal des jeweiligen Lichtempfängers auswertet.

Jeder Auswerteeinrichtung ist die Grundmodulationsfrequenz bzw. sind die Grundmodulationsfrequenzen der der Auswerteeinrichtung zugeordneten Lichtsender bekannt.

Von einer Auswerteeinrichtung wird in Abhängigkeit des Empfangssignals oder der Empfangssignale ein Objekt-Feststellungssignal erzeugt. Das Objekt-Feststellungssignal kann zum Beispiel bei einer Ausführungsform, bei der sich Lichtsender und -empfänger auf gegenüberliegenden Seiten des Überwachungsbereiches befinden, bevorzugt dann abgegeben werden, wenn die Auswerteeinrichtung aufgrund des Empfangssignals oder der Empfangssignale von einem oder mehreren der Auswerteeinrichtung zugeordneten Lichtempfänger erkennt, dass der Lichtpfad zwischen einem dem jeweiligen Lichtempfänger zugeordneten Lichtsender und dem Lichtempfänger durch ein Objekt unterbrochen ist. Das Objekt-Feststellungssignal kann beliebig weiterverarbeitet werden und beispielsweise dazu dienen, ein Warnsignal zu erzeugen oder eine Maschine zu stoppen.

Bei einer vorteilhaften Ausgestaltung sind die mehreren Lichtsender der optoelektronischen Sensoranordnung auf mehrere Lichtschranken oder mehrere Lichtgitter oder eine beliebige Kombination aus einem oder mehreren Lichtschranken und einem oder mehreren Lichtgittern aufgeteilt, wobei vorzugsweise allen Lichtsendern, die zu einer bestimmten Lichtschranke oder einem bestimmten Lichtgitter gehören, eine gemeinsame, zu der jeweiligen Lichtschranke bzw. dem jeweiligen Lichtgitter gehörige Grundmodulationsfrequenz zugeordnet wird, die sich von den Grundmodulationsfrequenzen der übrigen Lichtgitter bzw. aller Lichtschranken unterscheidet.

Bei dieser Ausgestaltung werden also mehrere Lichtgitter bzw. Lichtschranken parallel betrieben, wobei sich die Grundmodulationsfrequenzen aller Lichtgitter und Lichtschranken voneinander unterscheiden. Durch die Verwendung unterschiedlicher Modulationsfrequenzen ist hierbei sichergestellt, dass sich die Lichtgitter und Lichtschranken nicht gegenseitig stören. Wenn sich beispielsweise ein Objekt in dem Überwachungsbereich eines Lichtgitters befindet und ein Lichtempfänger desselben Lichtgitters deshalb kein Lichtsignal von einem ihm zugeordneten Lichtsender empfängt, kann dies selbst dann durch eine Auswerteeinrichtung erkannt und ein entsprechende Objekt-Feststellungssignal erzeugt werden, wenn der Lichtempfänger Störlichtsignale von einem Lichtsender eines anderen Lichtgitters bzw. einer anderen Lichtschranke empfängt, da sich die Grundmodulationsfrequenzen der zwei Sender unterscheiden. Solche Störlichtsignale können beispielsweise dann empfangen werden, wenn sich die Überwachungsbereiche von zwei Lichtgittern überlappen oder in einem Überwachungsbereich vorhandene reflektierende Gegenstände für eine entsprechende Lichtablenkung sorgen.

Das Erkennen des Objekts erfolgt dabei ohne zeitliche Verzögerung aufgrund von zeitlichen Codierungen, sodass die Ansprechzeit der beteiligten Lichtgitter bzw. Lichtschranken durch den Parallelbetrieb nicht verringert wird.

Hierbei ist es zweckmäßig, wenn jedes Lichtgitter bzw. jede Lichtschranke zumindest über eine eigene, von Auswerteeinrichtungen der übrigen Lichtgitter bzw. Lichtschranken unabhängige Auswerteeinrichtung verfügt, der die Lichtempfänger des Lichtgitters bzw. der Lichtschranke zugeordnet sind. Jeder Auswerteeinrichtung ist in diesem Fall zumindest die Grundmodulationsfrequenz des zugehörigen Lichtgitters bzw. der zugehörigen Lichtschranke bekannt, sodass eine Auswertung wie oben beschrieben geschehen kann.

Mit diesem erfindungsgemäßen Verfahren können also mehrere Lichtgitter bzw. Lichtschranken oder Kombinationen davon parallel und beispielsweise mit überlappenden Überwachungsbereichen betrieben werden, ohne dass eine gegenseitige Störung, eine Verringerung der Zuverlässigkeit oder eine wesentliche Erhöhung der Ansprechzeit in Kauf genommen werden muss.

Dies gilt auch und insbesondere dann, wenn die verschiedenen Lichtgitter bzw. Lichtschranken vom selben Typ sind. Die beteiligten Lichtgitter und/oder Lichtschranken können baulich identisch sein, da eine erfindungsgemäße Wahl der Grundmodulationsfrequenzen elektronisch oder softwaretechnisch geschehen kann und die Lichtgitter und Lichtschranken insbesondere konfiguriert sein können, um ihre Grundmodulationsfrequenzen in Anwesenheit anderer Lichtgitter und Lichtschranken automatisch geeignet zu wählen.

Andererseits können auch in ein- und demselben Lichtgitter Lichtsender unterschiedliche Grundmodulationsfrequenzen aufweisen. Hierbei sind dann die Grundmodulationsfrequenzen von wenigstens einem ersten und einem zweiten Lichtsender des Lichtgitters unterschiedlich und die von den zwei Lichtsendern gesendeten Lichtsignale können anhand der verschiedenen Grundmodulationsfrequenzen von einer Auswerteeinrichtung unterschieden werden, sodass verhindert wird, dass auf einen dem ersten Lichtsender zugeordneten Lichtempfänger auftreffendes Störlicht von dem zweiten Lichtsender die Detektion eines Objekts stört, welches sich zwischen dem ersten Lichtsender und dem Lichtempfänger befindet bzw. einen Lichtpfad zwischen dem ersten Lichtsender und dem Lichtempfänger unterbricht.

Erfindungsgemäß überprüft die Auswerteeinrichtung des wenigstens einen Lichtempfängers das Empfangssignal des wenigstens einen Lichtempfängers auf Vorhandensein einer Grundmodulationsfrequenz wenigstens eines Lichtsenders, dem der wenigstens eine Lichtempfänger zugeordnet ist. Durch Überprüfen, ob die Grundmodulationsfrequenz eines Lichtsenders in dem besagten Empfangssignal vorhanden ist oder nicht, stellt die Auswerteeinrichtung fest, ob zwischen diesem speziellen Lichtsender und dem zugeordneten Lichtempfänger ein Objekt vorhanden ist.

Besonders bevorzugt ist es, wenn die mehreren Lichtsender als Lichtsignale jeweils einen oder mehrere Sende-Bursts, die jeweils die dem jeweiligen Lichtsender zugeordnete Grundmodulationsfrequenz aufweisen, aussenden. Ein Sende-Burst besteht dabei aus einem innerhalb eines begrenzten Zeitintervalls gesendeten Signal, welches innerhalb des Zeitintervalls entsprechend der zugeordneten Grundmodulationsfrequenz periodisch ist.

Das Aussenden solcher Sende-Bursts hat den Vorteil, dass die Lichtsender nur während bestimmter Zeitintervalle Licht erzeugen. Außerdem können unterschiedliche Lichtsender konfiguriert und angesteuert sein, um ihre Sende-Bursts zeitversetzt zu den Sende-Bursts anderer Lichtsender zu senden, wodurch eine gegenseitige Störung der Lichtsignale an den Lichtempfänger und in der nachfolgenden Auswertung in der Auswerteeinrichtung vermieden werden kann.

Besonders bevorzugt ist es, wenn die Auswerteeinrichtung des wenigstens einen Lichtempfängers das Empfangssignal des wenigstens einen Lichtempfängers innerhalb von Zeitintervallen auf das Vorhandensein der Grundmodulationsfrequenz wenigstens eines Lichtsenders, dem der wenigstens eine Lichtempfänger zugeordnet ist, überprüft, die mit Zeitintervallen synchronisiert sind, in denen der jeweilige Lichtsender Sende-Bursts sendet.

Eine derart zeitlich synchronisierte Auswertung ist besonders zuverlässig und erlaubt eine besonders geringe Ansprechzeit der optoelektronischen Sensoranordnung. Die Synchronisation kann elektronisch geschehen, wozu elektronische Verbindungen zwischen den beteiligten Lichtsendern und Auswerteeinrichtungen vorgesehen sein können.

Eine zeitliche Auswertung der Sende-Bursts erlaubt es außerdem, zusätzlich zu den unterschiedlichen Grundmodulationsfrequenzen unterschiedliche Codierungen von Lichtsendern in Form von unterschiedlichen zeitlichen Abfolgen der Sende-Bursts zu realisieren und somit die Störsicherheit der optoelektronischen Sensoranordnung noch weiter zu erhöhen.

Bei einer synchronisierten Verfahrensführung ist außerdem bei entsprechender Auslegung der Auswerteeinrichtung auch die Messung der Lichtlaufzeit möglich, aus der auf den Abstand oder das Profil eines detektierten Objektes geschlossen werden kann, wenn die Lichtsender und - empfänger sich auf derselben Seite des Überwachungsbereiches befinden.

Erfindungsgemäß überprüft die Auswerteeinrichtung des wenigstens einen Lichtempfängers das Empfangssignal des wenigstens einen Lichtempfängers auf Vorhandensein der Grundmodulationsfrequenz wenigstens eines Lichtsenders, indem sie das Empfangssignal mittels einer Mischerstufe mit einem lokalen Signal mischt, wobei eine Frequenz des lokalen Signals so gewählt wird, dass der Frequenzabstand zwischen der Frequenz des lokalen Signals und der zu überprüfenden Grundmodulationsfrequenz einer vorgegebenen Referenzfrequenz entspricht, und das gemischte Signal auf Vorhandensein der Referenzfrequenz überprüft.

Dabei wird also diejenige Grundmodulationsfrequenz, auf die die jeweilige Auswerteeinrichtung das Empfangssignal überprüft, durch die Wahl der Frequenz des lokalen Signals festgelegt. Ein Einstellen der Frequenz des lokalen Signals ist besonders einfach möglich und kann beispielsweise elektronisch erfolgen.

Das lokale Signal besteht vorzugsweise aus einem sinusförmigen Signal mit einer bestimmten Frequenz. Da die Mischerstufe das Empfangssignal bzw. die Empfangssignale so mischt, dass die abzuprüfende Grundmodulationsfrequenz auf die Referenzfrequenz fällt, kann das Empfangssignal dadurch auf die Grundmodulationsfrequenz überprüft werden, dass das gemischte Signal auf die Referenzfrequenz überprüft wird. Letzteres kann auf einfache Weise mit einem schmalbandigen Bandpassfilter erfolgen, dessen Durchlassfrequenzbereich die Referenzfrequenz umfasst.

Die Frequenz des lokalen Signals kann einmalig eingestellt werden, um die Auswerteeinrichtung für das Überprüfen einer bestimmten Grundmodulationsfrequenz zu konfigurieren, oder die Frequenz des lokalen Signals kann auf elektronische Weise laufend verändert werden, beispielsweise um das Empfangssignal in aufeinander folgenden Zeitintervallen auf unterschiedliche Grundmodulationsfrequenzen zu überprüfen.

Eine weitere bevorzugte Ausgestaltung der Erfindung sieht vor, dass wenigstens einer der mehreren Lichtsender mit einem periodischen Modulationssignal beaufschlagt wird, dessen Periodendauer der dem wenigstens einen Lichtsender zugeordneten Grundmodulationsfrequenz entspricht, wobei das periodische Anregungssignal vorzugsweise ein periodisches Rechtecksignal oder ein aus den positiven Halbwellen eines Sinussignals bestehendes Lichtsignal ist.

Durch eine solche Anregung eines Lichtsenders wird erreicht, dass der Zeitverlauf der Intensität des von dem Lichtsender abgegebenen Lichts mit der gewünschten Grundmodulationsfrequenz periodisch ist und somit das gewünschte Lichtsignal erzeugt wird.

Ferner ist es bevorzugt, wenn die Grundmodulationsfrequenzen aller Lichtsender so gewählt und den Lichtsendern zugeordnet werden, dass die Grundmodulationsfrequenzen aller Lichtsender in einem Arbeits-Frequenzbereich liegen und voneinander verschiedene Grundmodulationsfrequenzen jeweils einen ersten vorgegebenen Mindestfrequenzabstand zueinander, einen zweiten vorgegebenen Mindestfrequenzabstand zu den Vielfachen aller Grundmodulationsfrequenzen, sowie einen dritten vorgegebenen Mindestfrequenzabstand zu Intermodulationsproduktfrequenzen, die sich durch die Intermodulationen bestimmter, vorgegebener Ordnungen aller Grundmodulationsfrequenzen ergeben, aufweisen.

Durch die Wahl der Grundmodulationsfrequenzen unter Berücksichtigung von Mindestfrequenzabständen wie vorstehend beschrieben wird vermieden, dass das Überprüfen des Empfangssignals bzw. der Empfangssignale durch eine Auswerteeinrichtung auf eine bestimmte Grundmodulationsfrequenz durch Vielfache der Grundmodulationsfrequenzen, Intermodulationsprodukte der Grundmodulationsfrequenzen oder durch von der überprüften Grundmodulationsfrequenz verschiedene Grundmodulationsfrequenzen selbst gestört wird.

Auf diese Weise kann die Störwirkung von ungeradzahligen Vielfachen der Grundmodulationsfrequenzen wirksam verringert werden, die beispielsweise durch Nichtlinearitäten der Signalverarbeitung innerhalb der Auswerteeinrichtung aus der einfachen Grundmodulationsfrequenz entstehen können, oder verstärkt in dem diskreten Spektrum des Lichtsignals eines Lichtsenders auftreten, wenn die Anregung des Lichtsignals beispielsweise zum Zweck einer einfachen schaltungstechnischen Implementierung so ausgelegt ist, dass das periodische Anregungssignal im Wesentlichen einer Rechteckwelle entspricht.

Je nach Ausgestaltung des periodischen Anregungssignals können aber auch geradzahlige Vielfache der Grundmodulationsfrequenz verstärkt in dem Spektrum eines Lichtsignals eines Lichtsenders vorhanden sein, deren Wirkung durch die geschilderte Berücksichtigung von Mindestfrequenzabständen ebenfalls abgeschwächt werden kann.

Intermodulationsproduktfrequenzen der Grundmodulationsfrequenzen entstehen schließlich, wenn Empfangssignale in der Auswerteeinheit ausgewertet werden, die sich aus der Überlagerung der Lichtsignale von Lichtsendern mit verschiedenen Grundmodulationsfrequenzen ergeben, und insbesondere wenn sich dabei Komponenten der Auswerteeinheit oder des Lichtempfängers in einem nichtlinearen Bereich oder in einem Sättigungsbereich befinden.

Bekannterweise ergeben sich Intermodulationsproduktfrequenzen bei der Intermodulation von Signalen mit verschiedenen Frequenzen als Summen und Differenzen der intermodulierenden Frequenzen und lassen sich nach ihrer Ordnung sowie der Anzahl der an der Intermodulation beteiligten Frequenzen einordnen. Angenommen, dass zum Beispiel 3 verschiedene Grundmodulationsfrequenzen A, B und C verwendet werden sollen, ergeben sich zum einen Intermodulationsprodukte von zwei verschiedenen Frequenzen und zum anderen Intermodulationsprodukte von allen drei verschiedenen Frequenzen. Die Intermodulationsproduktfrequenzen mit zwei verschiedenen Frequenzen ergeben sich zum Beispiel zu:

$$|nA \pm mB|, \ |nB \pm mC| \ \text{und} \ |nA \pm mC| \ \text{mit } n, m = 1, 2, 3, \ldots,$$

wobei n+m die Ordnung des jeweiligen Intermodulationsprodukts angibt.

Die Intermodulationsprodukte von den drei verschiedenen Frequenzen ergeben sich zu:

$$|nA \pm mB \pm lC| \ \text{mit } n, m, l = 1, 2, 3, \ldots,$$

wobei n+m+l die Ordnung des jeweiligen Intermodulationsprodukts angibt.

Da Intermodulationsproduktfrequenzen abhängig von der Ordnung des jeweiligen Intermodulationsprodukts und abhängig von der Anzahl der an der Intermodulation beteiligten Grundmodulationsfrequenzen je nach der Anordnung der Lichtsender und Lichtempfänger unterschiedlich stark ausgeprägt sind, sieht eine bevorzugte Ausgestaltung vor, dass die Vorgabe für den Mindestfrequenzabstand von den Intermodulationsproduktfrequenzen bei der Wahl der Grundmodulationsfrequenzen nur auf vorgegebene Ordnungen von Intermodulationsprodukten und vorgegebene Anzahlen von intermodulierten Frequenzen angewendet wird, wobei die berücksichtigten Intermodulationsprodukte diejenigen sind, die in der optoelektronischen Sensoranordnung besonders stark ausgeprägt sind. Es können bei der Wahl der Grundmodulationsfrequenzen auch für verschiedene Ordnungen von Intermodulationsprodukten und für verschiedene Anzahlen von intermodulierten Frequenzen jeweils verschiedene Mindestfrequenzabstände zu den zu wählenden Grundmodulationsfrequenzen vorgegeben werden, um unterschiedlich stark ausgeprägte Intermodulationsprodukte geeignet zu berücksichtigen.

Die Wahl der jeweiligen Mindestfrequenzabstände erfolgt zweckmäßigerweise in Abhängigkeit von den Eigenschaften der in den Lichtempfängern und Auswerteeinrichtungen verwendeten Signalverarbeitungskomponenten, insbesondere von den Durchlassbereichen und den Steilheiten von Durchlassbereichgrenzen von in der Auswerteeinrichtung zur Filterung von Empfangssignalen vorgesehenen Bandpassfiltern.

Vorzugsweise werden drei verschiedene Grundmodulationsfrequenzen gewählt und es werden bei der Wahl der Grundmodulationsfrequenzen ein Arbeits-Frequenzbereich zwischen 1MHz und 4MHz, sowie ein Mindestfrequenzabstand zwischen Grundmodulationsfrequenzen von zwischen 450 und 750kHz und ein Mindestabstand zwischen Intermodulationsproduktfrequenzen von zwischen 200kHz und 400kHz vorgegeben. Bevorzugt werden hierbei Intermodulationsprodukte zweiter, dritter, fünfter und siebter Ordnung berücksichtigt, die sich aus der Intermodulation von zwei der zu wählenden Grundmodulationsfrequenzen ergeben sowie Intermodulationsprodukte dritter, fünfter und siebter Ordnung, die sich aus der Intermodulation von drei der zu wählenden Grundmodulationsfrequenzen ergeben.

Erfindungsgemäß ist es bevorzugt, wenn die Grundmodulationsfrequenzen der Lichtsender im Bereich zwischen 1MHz und 4MHz liegen, weil für Frequenzen gleich oder größer als 1MHz keine externen Störlichtsender mit entsprechender Störlichtfrequenz zu erwarten sind und weil übliche verfügbare Lichtsender, wie beispielsweise Leuchtdioden, problemlos mit Frequenzen bis zu 4MHz moduliert werden können, ohne den vorgesehenen Arbeitsbereich der Lichtsender zu verlassen.

Besonders bevorzugt ist es, wenn die Lichtsender der optoelektronischen Sensoranordnung drei verschiedene Grundmodulationsfrequenzen aufweisen, besonders bevorzugt eine Grundmodulationsfrequenz zwischen 0,8MHz und 1,2MHz, eine Grundmodulationsfrequenz zwischen 1,5MHz und 2,5MHz und eine Grundmodulationsfrequenz zwischen 3,0MHz und 4,5MHz.

Die vorliegende Erfindung betrifft neben dem Verfahren zum Betreiben einer optoelektronischen Sensoranordnung auch eine optoelektronische Sensoranordnung mit den Merkmalen des Anspruchs 7, insbesondere mit wenigstens einem Lichtgitter und insbesondere zur Durchführung eines Verfahrens nach einem der Ansprüche 1 bis 6 ausgebildet.

Eine erfindungsgemäße optoelektronische Sensoranordnung eignet sich insbesondere zur Ausführung des erfindungsgemäßen Verfahrens nach Anspruch 1, sodass die Vorteile des Verfahrens nach Anspruch 1 wie vorstehend beschrieben auch Vorteile der erfindungsgemäßen optoelektronischen Sensoranordnung darstellen.

Eine vorteilhafte Ausführungsform der erfindungsgemäßen optoelektronischen Sensoranordnung sieht vor, dass zumindest ein Lichtsender mit einer Anregungseinrichtung verbunden ist, die den Lichtsender mit einem periodischen Anregungssignal beaufschlagt, dessen Grundfrequenz einstellbar ist, wobei die Anregungseinrichtung vorzugsweise einen Direct Digital Synthesis Baustein (DDS-Baustein) und/oder einen Mikrocontroller mit einem Taktgeber umfasst.

Eine einstellbare Grundfrequenz einer Anregungseinrichtung hat den Vorteil, dass die optoelektronische Sensoranordnung jederzeit flexibel auf eine oder mehrere Grundmodulationsfrequenzen konfiguriert werden kann. So kann auf diese Weise die Grundmodulationsfrequenz eines Lichtgitters in der Sensoranordnung beispielsweise über einen Konfigurationseingang eines Lichtgitters oder über einen externen Schalter jederzeit so eingestellt werden, dass sie sich von den Grundmodulationsfrequenzen von weiteren Lichtgittern oder Lichtschranken der optoelektronischen Sensoranordnung unterscheidet.

Ein DDS-Baustein oder ein Mikrocontroller mit einem Taktgeber sind jeweils besonders geeignet, um ein mit der Grundmodulationsfrequenz eines Lichtsenders periodisches Anregungssignal zu erzeugen, welches beispielsweise einer positiven Sinushalbwelle oder einer Rechteckwelle entspricht, und wobei die Grundfrequenz des Anregungssignal elektronisch eingestellt bzw. programmiert werden kann.

Gemäß einer weiteren vorteilhaften Ausführungsform der erfindungsgemäßen optoelektronischen Sensoranordnung weist die Auswerteeinrichtung des wenigstens einen Lichtempfängers einen an dem Ausgang des wenigstens einen Lichtempfängers angeschlossenen Bandpassfilter auf, wobei der Durchlassbereich des Bandpassfilters vorzugsweise die Grundmodulationsfrequenzen aller Lichtsender umfasst.

Ein solcher Bandpassfilter filtert Störlichtsignale von externen Störlichtsendern aus dem Empfangssignal heraus und dient darüber hinaus als Anti-Aliasing-Filter, was insbesondere bei einer digitalen Auswertung des Empfangssignals in der Auswerteeinrichtung vorteilhaft ist. Erfindungsgemäß ist vorgesehen, dass die Auswerteeinrichtung des wenigstens einen Lichtempfängers eine Mischerstufe sowie einen mit der Mischerstufe verbundenen Signalgenerator aufweist, wobei der Signalgenerator zum Erzeugen eines lokalen Signals mit einer einstellbaren Frequenz ausgebildet ist.

Wie vorstehend beschrieben, ist eine Mischerstufe besonders geeignet, um ein Empfangssignal auf Vorhandensein einer Grundmodulationsfrequenz zu überprüfen, indem das Empfangssignal so gemischt wird, dass die Grundmodulationsfrequenz auf eine Referenzfrequenz fällt und das gemischte Signal dann auf Vorhandensein der Referenzfrequenz geprüft wird. Zum Überprüfen des gemischten Signals kann ein am Ausgang der Mischerstufe angeschlossener schmalbandiger Bandpassfilter (beispielsweise ein Keramikfilter) vorgesehen sein, der die Referenzfrequenz durchlässt. Ferner kann der Signalgenerator der Mischerstufe bevorzugt einen DDS-Baustein zum Erzeugen des lokalen Signals aufweisen.

Die Einstellbarkeit der Frequenz des lokalen Signals erlaubt es, die optoelektronische Sensoranordnung flexibel zu konfigurieren, insbesondere elektronisch. Über die Frequenz des lokalen Signals wird die Frequenz, auf deren Vorhandensein die Auswerteeinrichtung das Empfangssignal überprüft, so eingestellt, dass sie mit der Grundmodulationsfrequenz eines dem Lichtempfänger, der das Empfangssignal liefert, zugeordneten Lichtsenders identisch ist.

Die in der Auswerteeinrichtung eines Lichtgitters überprüfte Frequenz und die Grundmodulationsfrequenz der Lichtsender desselben Lichtgitters können somit aufeinander abgestimmt werden, insbesondere auf einen von der Grundmodulationsfrequenz eines anderen Lichtgitters verschiedenen Wert, beispielsweise wenn der optoelektronischen Sensoranordnung ein zusätzliches Lichtgitter hinzugefügt wird.

Eine weitere vorteilhafte Ausführungsform sieht vor, dass die Auswerteeinrichtung des wenigstens einen Lichtempfängers zwei getrennte Signalpfade mit jeweils einem Komparator aufweist, wobei einer der Komparatoren ausgebildet ist, um an einem Ausgang ein von dem Vorhandensein einer vorgegebenen Referenzfrequenz in seinem. Eingangssignal abhängiges Ausgangssignal zu liefern, und der andere Komparator ausgebildet ist, um an einem Ausgang ein von der Amplitude seines Eingangssignals abhängiges Ausgangssignal zu liefern.

Der zum Überprüfen eines Signals auf eine vorgegebene Referenzfrequenz ausgebildete Komparator hat bevorzugt eine sehr niedrige bzw. gegen Null gehende Schwelle und liefert dementsprechend an seinem Ausgang Signalpulse, die mit der Referenzfrequenz periodisch sind. Der zweite Komparator liefert bevorzugt eine von der Amplitude seines Eingangssignals abhängige Anzahl von Signalpulsen an seinem Ausgang. Bevorzugt werden die Ausgangssignale beider Komparatoren an einen Mikrocontroller geliefert, der die weitere Auswertung der Signale vornimmt und bevorzugt auch in Abhängigkeit von den ihm gelieferten Signalen ein Objekt-Feststellungssignal erzeugt.

Nach einer anderen vorteilhaften Ausführungsform weist die Auswerteeinrichtung des wenigstens einen Lichtempfängers einen Gleichrichter, einen in Signalflussrichtung hinter dem Gleichrichter angeordneten Integrator und einen in Signalflussrichtung hinter dem Integrator angeordneten Komparator, der ausgebildet ist, um an einem Ausgang ein von dem Überschreiten eines Schwellwerts durch seine Eingangsspannung abhängiges Lichtsignal zu liefern, auf.

Nach einer weiteren vorteilhaften Ausführungsform weist die Auswerteeinrichtung des wenigstens einen Lichtempfängers einen Analog/Digital-Wandler und einen digitalen Logikbaustein, der zum Überprüfen des Empfangssignals des wenigstens einen Lichtempfängers auf das Vorhandensein der Grundmodulationsfrequenz wenigstens eines Lichtsenders konfiguriert ist, auf.

Ein solcher digitaler Logikbaustein kann beispielsweise ein Mikroprozessor, ein digitaler Signalprozessor, ein Field Programmable Gate Array (FPGA) oder ein Application-Specific Integrated Circuit (ASIC) sein und bevorzugt konfiguriert sein, um ein digitales Filter mit einer endlichen Impulsantwort (FIR-Filter) oder mit einer unendlichen Impulsantwort (IIR-Filter) zu implementieren.

Nachfolgend wird die vorliegende Erfindung beispielhaft anhand mehrerer vorteilhafter Ausführungsformen unter Bezugnahme auf die beigefügten Zeichnungen beschrieben. Es zeigen:

Fig. 1 eine perspektivische Ansicht einer beispielhaften Ausfüh- rungsform einer erfindungsgemäßen optoelektronischen Sen- soranordnung;

Fig. 2 ein Schaltdiagramm eines Lichtsenders und einer Anregungs- einrichtung einer Ausführungsform einer erfindungsgemäßen optoelektronischen Sensoranordnung;

Fig. 3 ein Schaltdiagramm eines Lichtempfängers und eines ersten Teils einer Auswerteeinrichtung einer Ausführungsform einer erfindungsgemäßen optoelektronischen Sensoranordnung;

Fig. 4 ein Schaltdiagramm eines zweiten Teils einer Auswerteeinrich- tung einer Ausführungsform einer erfindungsgemäßen optoe- lektronischen Sensoranordnung;

Fig. 5a ein Schaltdiagramm eines dritten Teils einer Auswerteeinrich- tung einer erfindungsgemäßen optoelektronischen Sensoran- ordnung gemäß einer ersten Ausführungsform;

Fig. 5b   ein Schaltdiagramm eines dritten Teils einer Auswerteeinrich- tung einer erfindungsgemäßen optoelektronischen Sensoran- ordnung gemäß einer zweiten Ausführungsform; und

Fig. 6   ein Schaltdiagramm eines zweiten Teils einer Auswerteeinrich- tung einer dritten Ausführungsform einer erfindungsgemäßen optoelektronischen Sensoranordnung.

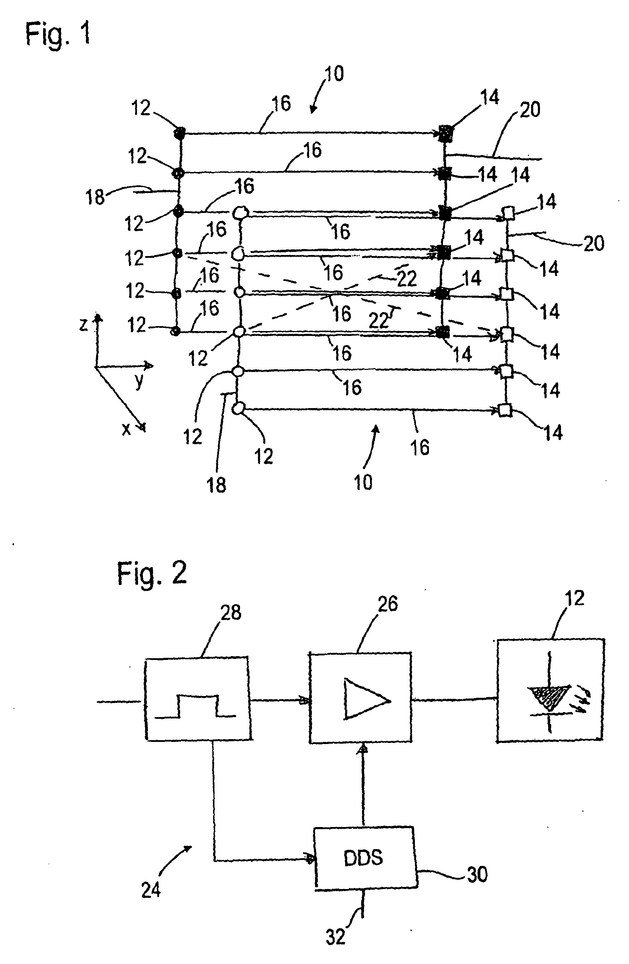

Fig. 1 zeigt eine beispielhafte Ausführungsform einer erfindungsgemäßen optoelektronischen Sensoranordnung, die zwei Lichtgitter 10 umfasst, die in x-Richtung voneinander beabstandet angeordnet sind.

Jedes Lichtgitter 10 weist hier sechs Lichtsender 12 sowie sechs Lichtempfänger 14 auf, wobei jedem Lichtsender 12 innerhalb jedes Lichtgitters 10 ein Lichtempfänger 14 zugeordnet ist. Zwischen jedem Lichtsender 12 und dem jeweils zugeordneten Lichtempfänger 14 besteht ein Lichtpfad 16, über den der Lichtempfänger 14 zumindest in Abwesenheit eines Objekts in dem zwischen den Lichtsendern 12 und den Lichtempfänger 14 vorhandenen Überwachungsbereich ein von dem jeweiligen Lichtsender 12 gesendetes Lichtsignal empfangen kann.

Jedes Lichtgitter 10 weist eine nicht dargestellte Anregungseinrichtung auf, mit der die Lichtsender 12 des jeweiligen Lichtgitters 10 über einen Anschluss 18 verbunden sind und von der Anregungseinrichtung angeregt werden. Ebenso weist jedes Lichtgitter 10 einen Anschluss 20 auf, über den die Lichtempfänger 14 des jeweiligen Lichtgitters 10 mit einer dem Lichtgitter 10 zugeordneten, nicht dargestellten Auswerteeinrichtung verbunden sind.

Aufgrund der gegenseitigen Anordnung der Lichtgitter 10 können neben den Lichtpfaden 16 auch Störlichtpfade 22 zwischen Lichtsendern 10 eines Lichtgitters 10 und Lichtempfänger 14 des jeweils anderen Lichtgitters 10 bestehen. Deshalb empfangen die Lichtempfänger 14 eines Lichtgitters 10 jeweils Lichtsignale von Lichtsendern 12 desselben Lichtgitters 10 sowie von Lichtsendern 12 des jeweils anderen (fremden) Lichtgitters 10.

Beiden Lichtgittern 10 sind voneinander verschiedene Grundmodulationsfrequenzen zugeordnet. Alle Lichtsender 12 eines Lichtsenders 10 senden als Lichtsignale in regelmäßigen Abständen Sende-Bursts, wobei jeder Sende- Burst ein mit der Grundmodulationsfrequenz des Lichtgitters 10, zu dem der jeweilige Lichtsender 12 gehört, periodisches Signal darstellt.

Die Auswerteeinrichtungen beider Lichtgitter 10 sind jeweils ausgebildet, um die von den Lichtempfängern 14 empfangenen Empfangssignale auf Vorhandensein der Grundmodulationsfrequenz des jeweiligen Lichtgitters 10 zu überprüfen.

Wird ein Lichtpfad 16 zwischen einem Lichtsender 12 und einem Lichtempfänger 14 eines Lichtgitters 10 durch ein in dem Überwachungsbereich des Lichtgitters 10 befindliches Objekt unterbrochen, so kann das Objekt also trotz eines möglichen Störlichtpfades 22, der von einem Lichtsender 12 des anderen Lichtgitters 10 zu dem Lichtempfänger 14 führt, detektiert werden, weil das von dem Lichtsender 12 des fremden Lichtgitters 10 stammende Lichtsignal eine Grundmodulationsfrequenz aufweist, die von der Grundmodulationsfrequenz verschieden ist, die zu dem Lichtgitters 10 gehört, in dessen Überwachungsbereich sich das Objekt befindet.

Fig. 2 zeigt ein Schaltdiagramm eines Lichtsenders 12 und einer Anregungseinrichtung 24 einer erfindungsgemäßen optoelektronischen Sensoranordnung. Der Lichtsender 12, der hier als Leuchtdiode ausgebildet ist, wird von einem Treiber 26 beaufschlagt. Der Treiber 26 wird von einem Rechtecksignalgenerator 28 sowie von einem ebenfalls von dem Rechtecksignalgenerator 28 beaufschlagten DDS-Baustein 30 beaufschlagt und multipliziert die beiden gelieferten Signale und verstärkt das multiplizierte Signal.

Die von dem Rechtecksignalgenerator 28 bereitgestellten Rechtecksignale legen die Sende-Zeitintervalle der Sende-Bursts fest. Der DDS-Baustein 30 ist konfiguriert, um innerhalb der von dem Rechtecksignalgenerator 28 festgelegten Zeitintervalle ein Anregungssignal zu generieren, das aus den positiven Halbwellen eines Sinussignals besteht, dessen Frequenz der Grundmodulationsfrequenz des Lichtsenders 12 entspricht.

Der DDS-Baustein 30 weist dazu einen Konfigurationseingang 32 auf, über den die Frequenz des Anregungssignals und damit die Grundmodulationsfrequenz des Lichtsenders 12 einstellbar ist.

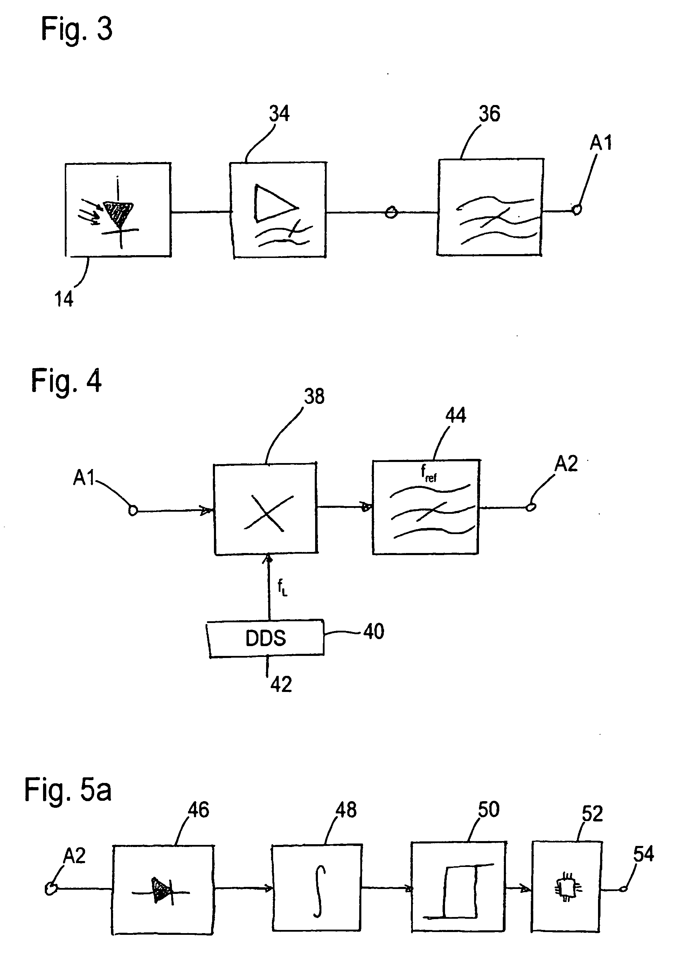

Fig. 3 zeigt ein Schaltdiagramm eines Lichtempfängers 14 und eines ersten Teils einer Auswerteeinrichtung einer erfindungsgemäßen optoelektronischen Sensoranordnung, mit dem der Lichtempfänger 14, der als Photodiode ausgebildet ist, an seinem Ausgang verbunden ist.

Dieser erste Teil der Auswerteeinrichtung weist einen Eingangsverstärker 34 auf, dessen Verstärkung bei dem vorliegenden Ausführungsbeispiel ständig nachgeführt wird, um eine Sättigung des Eingangsverstärkers 34 und ein damit verbundenes Auftreten von Oberwellen mit den Vielfachen der Grundmodulationsfrequenzen möglichst zu verhindern.

Der Eingangsverstärker 34 ist mit einem ersten Bandpassfilters 36 verbunden, dessen Durchlassbereich die Grundmodulationsfrequenzen aller Lichtsender der optoelektronischen Sensoranordnung, zu der die Auswerteeinrich- tung gehört, umfasst. Am Ausgang des Bandpassfilters befindet sich ein erster Anschluss A1.

Fig. 4 zeigt ein Schaltdiagramm eines zweiten Teils der Auswerteeinrichtung einer erfindungsgemäßen optoelektronischen Sensoranordnung. Der in Fig. 4 dargestellte Schaltungsteil ist an dem Anschluss A1 des Bandpassfilters aus Fig. 3 angeschlossen. In dem dargestellten Schaltungsteil wird das Ausgangssignal des Bandpassfilters 36 aus Fig. 3 wie folgt analog weiter verarbeitet.

An dem Anschluss A1 ist ein erster Eingang einer Mischerstufe 38 angeschlossen, die das Signal mit dem an einem zweiten Eingang der Mischerstufe 38 anliegenden lokalen Signal mischt, das von einem Signalgenerator 40 generiert wird, der zum Beispiel einen weiteren DDS-Baustein umfasst. Der Signalgenerator 40 ist konfiguriert, um ein Sinussignal zu liefern, dessen Frequenz $f_L$ so gewählt ist, dass der Frequenzabstand zwischen der Frequenz des lokalen Signals $f_L$ und einer Grundmodulationsfrequenz, auf die die Auswerteeinrichtung das von dem Lichtempfänger 14 empfangene Signal überprüft, einer vorgegebenen Referenzfrequenz $f_{ref}$ entspricht.

Der Signalgenerator 40 weist einen Konfigurationseingang 42 auf, durch den die Frequenz $f_L$ des von dem Signalgenerator 40 generierten lokalen Signals und damit die Frequenz, auf die die Auswerteeinrichtung das von dem Lichtempfänger 14 empfangene Empfangssignal überprüft, eingestellt werden kann. Eine solche Einstellung kann elektronisch, beispielsweise durch einen Mikrocontroller, oder durch einen Benutzer, beispielsweise mittels eines geeigneten Benutzereingangs an dem Lichtgitter, geschehen, sodass die überprüft Frequenz während des Betriebs nach festgelegten Kriterien geändert werden kann.

Am Ausgang der Mischerstufe 38 befindet sich ein schmalbandiger Bandpassfilter 44, dessen Durchlassbereich die Referenzfrequenz $f_{ref}$ umfasst. Am Ausgang des Bandpassfilters 44 befindet sich ein zweiter Anschluss A2.

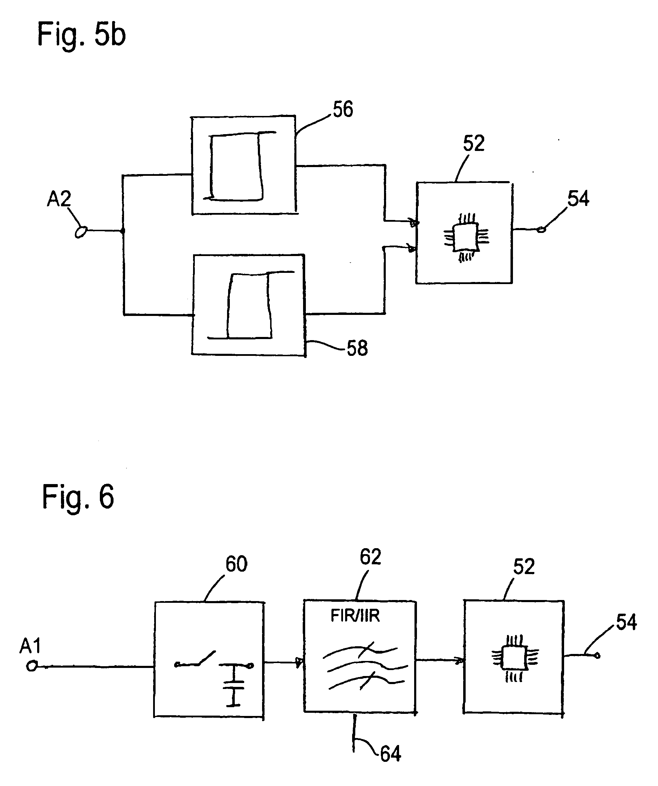

In den Fig. 5a und 5b sind zwei alternative Schaltungsteile einer Auswerteeinrichtung einer erfindungsgemäßen optoelektronischen Sensoranordnung dargestellt, mit denen das von dem Bandpassfilter 44 aus Fig. 4 bereitgestellte analoge Signal analog weiterverarbeitet werden kann.

Fig. 5a zeigt dabei ein Schaltdiagramm einer ersten Ausführungsform eines dritten Teils einer Auswerteeinrichtung einer erfindungsgemäßen optoelektronischen Sensoranordnung, die an den Anschluss A2 des Bandpassfilters 44 aus Fig. 4 angeschlossen ist.

Mit dem Anschluss A2 ist dabei der Eingang eines Einweggleichrichters 46 verbunden, der das von dem Bandpassfilter 44 aus Fig. 4 bereitgestellte Signal gleichrichtet. Mit dem Einweggleichrichter 46 ist ein Integrator 48 verbunden, der das gleichgerichtete Signal über ein Zeitfenster vorgegebener Länge fortlaufend integriert. An dem Ausgang des Integrators 48 ist ein Komparator 50 angeschlossen, der ein von der Amplitude des integrierten Signals abhängiges Ausgangssignal generiert und an dessen Ausgang ein Microcontroller 52 angeschlossen ist, der das von der Amplitude des integrierten Signals abhängige Signal weiter verarbeitet und an dessen Ausgang 54 in Abhängigkeit von dem Eingangssignal des Microcontrollers 52 ein Objekt-Feststellungssignal abgegeben wird.

Fig. 5b zeigt ein Schaltdiagramm einer zweiten Ausführungsform eines dritten Teils einer Auswerteeinrichtung einer erfindungsgemäßen optoelektronischen Sensoranordnung mit zwei parallelen, an den Anschluss A2 aus Fig. 4 angeschlossenen Komparatoren 56 und 58.

Der eine Komparator 56 liefert ein von der Grundfrequenz des an Anschluss A2 anliegenden Signals abhängiges Signal und der andere Komparator 58 liefert ein von der Amplitude des an Anschluss A2 anliegenden Signals abhängiges Signal. Die von beiden Komparatoren 56, 58 gelieferten Signale werden von einem Microcontroller 52 jeweils an einem Eingang aufgenommen und von diesem wie in Bezug zu Fig. 5a beschrieben weiterverarbeitet.

Fig. 6 zeigt ein Schaltdiagramm einer zweiten Ausführungsform eines zweiten Teils einer Auswerteeinrichtung einer erfindungsgemäßen optoelektronischen Sensoranordnung, in der das am Anschluss A1 aus Fig. 3 gelieferte Signal digital weiterverarbeitet wird. Hierzu ist ein Analog/Digital-Wandler 60 mit dem Anschluss A1 aus Fig. 3 verbunden, der das an Anschluss 1 anliegende, analoge Signal in ein digitales Signal umwandelt. An dem Ausgang des Analog/Digital-Wandlers 60 ist ein FPGA-Baustein 62 angeschlossen, der konfiguriert ist um das von dem Analog/Digital-Wandler 60 gelieferte, digitale Signal gemäß einer vorgegebenen endlichen oder unendlichen Impulsantwort zu filtern, wobei die Impulsantwort so ausgebildet ist, dass die Filterfunktion einer schmalbandigen, digitalen Bandpassfilterung entspricht, wobei die Grundmodulationsfrequenz, auf die die Auswerteeinrichtung das von dem Lichtempfänger 14 empfangene Signal überprüfen soll, in dem Durchlassbereich der digitalen Bandpassfilterung ist.

Der FPGA-Baustein 62 besitzt einen Konfigurationseingang 64, über den die von dem FPGA-Baustein 62 durchgelassene Frequenz und damit die Frequenz, auf die die Auswerteeinrichtung das Empfangssignal überprüft, eingestellt werden kann.

An einem Ausgang des FPGA-Bausteins 62 ist ein Microcontroller 52 angeschlossen, der das von dem FPGA-Baustein 62 gelieferte Signal wie in Bezug auf Fig. 5a beschrieben weiter verarbeitet.

**Bezugszeichenliste**

10 Lichtgitter
12 Lichtsender
14 Lichtempfänger
16 Lichtpfad

| 18 | Anschluss |
|---|---|
| 20 | Anschluss |
| 22 | Störlichtpfad |
| 24 | Anregungseinrichtung |
| 26 | Treiber |
| 28 | Rechtecksignalgenerator |
| 30 | DDS-Baustein |
| 32 | Konfigurationseingang |
| 34 | Eingangsverstärker |
| 36 | Bandpassfilter |
| A1 | Anschluss |
| 38 | Mischerstufe |
| 40 | Signalgenerator |
| $f_L$ | Frequenz des lokalen Signals |
| 42 | Konfigurationseingang |
| $f_{ref}$ | Referenzfrequenz |
| 44 | Bandpassfilter |
| A2 | Anschluss |
| 46 | Einweggleichrichter |
| 48 | Integrator |
| 50 | Komparator |
| 52 | Microcontroller |
| 54 | Ausgang |
| 56 | Komparator |
| 58 | Komparator |
| 60 | Analog/ Digital-Wandler |
| 62 | FPGA-Baustein |
| 64 | Konfigurationseingang |

**Patentansprüche**

1. Verfahren zum Betreiben einer optoelektronischen Sensoranordnung, vorzugsweise wenigstens ein Lichtgitter (10) umfassend, bei dem

   - mehrere Lichtsender (12) jeweils wenigstens ein Lichtsignal in einen Überwachungsbereich aussenden, wobei das wenigstens eine von einem Lichtsender (12) ausgesendete Lichtsignal eine dem jeweiligen Lichtsender (12) zugeordnete Grundmodulationsfrequenz aufweist, die von der Grundmodulationsfrequenz von dem wenigstens einen Lichtsignal wenigstens eines anderen Lichtsenders (12) verschieden ist,
   - das wenigstens eine Lichtsignal eines Lichtsenders (12) jeweils von wenigstens einem diesem Lichtsender (12) zugeordneten Lichtempfänger (14) empfangbar ist,
   - das Empfangssignal des wenigstens einen Lichtempfängers (14) von einer dem wenigstens einen Lichtempfänger (14) zugeordneten Auswerteeinrichtung ausgewertet wird und
   - von der Auswerteeinrichtung in Abhängigkeit des Empfangssignals oder der Empfangssignale ein Objekt-Feststellungssignal erzeugt wird

   **dadurch gekennzeichnet, dass**
   die Auswerteeinrichtung des wenigstens einen Lichtempfängers (14) das Empfangssignal des wenigstens einen Lichtempfängers (14) auf Vorhandensein der Grundmodulationsfrequenz wenigstens eines Lichtsenders (12) überprüft dem der wenigstens eine Lichtempfänger (14) zugeordnet ist, indem sie mittels eines Signalgenerators ein lokales Signal mit einer einstellbaren Frequenz erzeugt, das Empfangssignal mittels einer Mischerstufe (38) mit dem lokalen Signal mischt, wobei eine Frequenz $f_L$ des lokalen Signals so eingestellt wird, dass der Frequenzabstand zwischen der Frequenz $f_L$ des lokalen Signals und der zu überprüfenden Grundmodulationsfrequenz einer vorgegebenen Referenzfrequenz entspricht, und das gemischte Signal auf Vorhandensein der Referenzfrequenz überprüft.

2. Verfahren nach Anspruch 1,
   **dadurch gekennzeichnet, dass**

die mehreren Lichtsender (12) der optoelektronischen Sensoranordnung auf mehrere Lichtschranken oder mehrere Lichtgitter (10) oder eine beliebige Kombination aus einem oder mehreren Lichtschranken und einem oder mehreren Lichtgittern (10) aufgeteilt sind, wobei vorzugsweise allen Lichtsendern (12), die zu einer bestimmten Lichtschranke oder einem bestimmten Lichtgitter (10) gehören, eine gemeinsame, zu der jeweiligen Lichtschranke bzw. dem jeweiligen Lichtgitter (10) gehörige Grundmodulationsfrequenz zugeordnet wird und wobei sich die Grundmodulationsfrequenzen aller Lichtgitter (10) bzw. aller Lichtschranken der optoelektronischen Sensoranordnung voneinander unterscheiden.

3. Verfahren nach einem der vorstehenden Ansprüche,
   **dadurch gekennzeichnet, dass**
   die mehreren Lichtsender (12) als Lichtsignale jeweils einen oder mehrere Sende-Bursts, die jeweils die dem jeweiligen Lichtsender (12) zugeordnete Grundmodulationsfrequenz aufweisen, aussenden.

4. Verfahren nach Anspruch 3,
   **dadurch gekennzeichnet, dass**
   die Auswerteeinrichtung des wenigstens einen Lichtempfängers (14) das Empfangssignal des wenigstens einen Lichtempfängers (14) innerhalb von Zeitintervallen auf das Vorhandensein der Grundmodulationsfrequenz wenigstens eines Lichtsenders (12), dem der wenigstens eine Lichtempfänger (14) zugeordnet ist, überprüft, die mit Zeitintervallen synchronisiert sind, in denen der jeweilige Lichtsender (12) Sende-Bursts sendet.

5. Verfahren nach einem der vorstehenden Ansprüche,
   **dadurch gekennzeichnet, dass**
   wenigstens einer der mehreren Lichtsender (12) mit einem periodischen Modulationssignal beaufschlagt wird, dessen Periodendauer der dem wenigstens einen Lichtsender (12) zugeordneten Grundmodulationsfrequenz entspricht, wobei das periodische Modulationssignal vorzugsweise ein periodisches Rechtecksignal oder ein aus den positiven Halbwellen eines Sinussignals bestehendes Signal ist.

6. Verfahren nach einem der vorstehenden Ansprüche,
   **dadurch gekennzeichnet, dass**
   die Grundmodulationsfrequenzen aller Lichtsender (12) so gewählt und den Lichtsendern (12) zugeordnet werden, dass die Grundmodulationsfrequenzen aller Lichtsender (12) in einem Arbeits-Frequenzbereich liegen und/ oder voneinander verschiedene Grundmodulationsfrequenzen einen ersten vorgegebenen Mindestfrequenzabstand zueinander und/oder einen zweiten vorgegebenen Mindestfrequenzabstand zu den Vielfachen aller Grundmodulationsfrequenzen und/oder einen dritten vorgegebenen Mindestfrequenzabstand zu Intermodulationsproduktfrequenzen, die sich durch die Intermodulationen bestimmter, vorgegebener Ordnungen aller Grundmodulationsfrequenzen ergeben, aufweisen.

7. Optoelektronische Sensoranordnung, insbesondere mit wenigstens einem Lichtgitter (10) und insbesondere zur Durchführung eines Verfahrens nach einem der Ansprüche 1 bis 6, mit

   - mehreren Lichtsendern (12), mit denen jeweils wenigstens ein Lichtsignal so in einen Überwachungsbereich aussendbar ist, dass das wenigstens eine, von einem Lichtsender (12) ausgesendete Lichtsignal eine dem jeweiligen Lichtsender (12) zugeordnete Grundmodulationsfrequenz aufweist, die von der Grundmodulationsfrequenz des wenigstens einen Lichtsignals wenigstens eines anderen Lichtsenders (12) verschieden ist,
   - wenigstens einem Lichtempfänger (14), der zum Empfangen des wenigstens einen Lichtsignals wenigstens eines Lichtsenders (12) ausgebildet ist, und
   - einer dem wenigstens einen Lichtempfänger (14) zugeordneten Auswerteeinrichtung, die zur Auswertung des Empfangssignals des wenigstens einen Lichtempfängers (14) sowie zum Erzeugen eines Objekt-Feststellungssignals in Abhängigkeit des Empfangssignals oder der Empfangssignale ausgebildet ist

   **dadurch gekennzeichnet, dass**
   die Auswerteeinrichtung des wenigstens einen Lichtempfängers (14) eine Mischerstufe (38) sowie einen mit der Mischerstufe (38) verbundenen Signalgenerator (40) zum Erzeugen eines lokalen Signals mit einer einstellbaren Frequenz aufweist, wobei die Auswerteeinrichtung ausgebildet ist, um das Empfangssignal des wenigstens einen Lichtempfängers (14) auf Vorhandensein der Grundmodulationsfrequenz wenigstens eines Lichtsenders (12) zu überprüfen, indem die Auswerteeinrichtung mittels des Signalgenerators ein lokales Signal mit einer einstellbaren Frequenz erzeugt, das Empfangssignal mittels der Mischerstufe (38) mit dem lokalen Signal mischt, wobei eine Frequenz $f_L$ des lokalen Signals so eingestellt wird, dass der Frequenzabstand zwischen der Frequenz $f_L$ des lokalen Signals und der zu überprüfenden Grundmodulationsfrequenz einer vorgegebenen Referenzfrequenz entspricht, und das gemischte Signal auf Vorhandensein der Referenzfrequenz überprüft.

**8.** Optoelektronische Sensoranordnung nach Anspruch 7,
**dadurch gekennzeichnet, dass**
mit jedem der mehreren Lichtsender (12) als Lichtsignale jeweils ein oder mehrere Sende-Bursts, die jeweils die dem jeweiligen Lichtsender (12) zugeordnete Grundmodulationsfrequenz aufweisen, aussendbar sind.

**9.** Optoelektronische Sensoranordnung nach Anspruch 7 oder 8,
**dadurch gekennzeichnet,dass**
die mehreren Lichtsender (12) der optoelektronischen Sensoranordnung auf mehrere Lichtschranken oder mehrere Lichtgitter (10) oder eine beliebige Kombination aus einem oder mehreren Lichtschranken und einem oder mehreren Lichtgittern (10) aufgeteilt sind, wobei insbesondere allen Lichtsendern (12), die zu einer bestimmten Lichtschranke oder einem bestimmten Lichtgitter (10) gehören, eine gemeinsame, zu der jeweiligen Lichtschranke bzw. dem jeweiligen Lichtgitter (10) gehörige Grundmodulationsfrequenz zugeordnet ist und wobei sich die Grundmodulationsfrequenzen aller Lichtgitter (10) und aller Lichtschranken voneinander unterscheiden.

**10.** Optoelektronische Sensoranordnung nach einem der Ansprüche 7 bis 9,
**dadurch gekennzeichnet, dass**
zumindest ein Lichtsender (12) mit einer Anregungseinrichtung (24) verbunden ist, die den Lichtsender (12) mit einem periodischen Modulationssignal beaufschlagt, dessen Grundfrequenz einstellbar ist, wobei die Anregungseinrichtung vorzugsweise einen DDS-Baustein (30) und/oder einen Mikrocontroller mit einem Taktgeber aufweist.

**11.** Optoelektronische Sensoranordnung nach einem der Ansprüche 7 bis 10,
**dadurch gekennzeichnet, dass**
die Auswerteeinrichtung des wenigstens einen Lichtempfängers (14) einen an dem Ausgang des wenigstens einen Lichtempfängers (14) angeschlossenen Bandpassfilter (36) aufweist, wobei der Durchlassbereich des Bandpassfilters (36) vorzugsweise die Grundmodulationsfrequenzen aller Lichtsender umfasst.

**12.** Optoelektronische Sensoranordnung nach einem der Ansprüche 7 bis 11,
**dadurch gekennzeichnet, dass**
die Auswerteeinrichtung des wenigstens einen Lichtempfängers (14) einen Analog/Digital-Wandler (60) und einen digitalen Logikbaustein (62), der zum Überprüfen des Empfangssignals des wenigstens einen Lichtempfängers (14) auf das Vorhandensein der Grundmodulationsfrequenz wenigstens eines Lichtsenders (12) konfiguriert ist, aufweist.

**13.** Optoelektronische Sensoranordnung nach einem der Ansprüche 7 bis 11,
**dadurch gekennzeichnet, dass**
die Auswerteeinrichtung des wenigstens einen Lichtempfängers (14) zwei getrennte Signalpfade mit jeweils einem Komparator (56, 58) aufweist, wobei einer der Komparatoren (56) ausgebildet ist, um an einem Ausgang ein von dem Vorhandensein einer vorgegebenen Referenzfrequenz in seinem Eingangssignal abhängiges Ausgangssignal zu liefern, und der andere Komparator (58) ausgebildet ist, um an einem Ausgang ein von der Amplitude seines Eingangssignals abhängiges Ausgangssignal zu liefern.

**14.** Optoelektronische Sensoranordnung nach einem der Ansprüche 7 bis 11,
**dadurch gekennzeichnet, dass**
die Auswerteeinrichtung des wenigstens einen Lichtempfängers (14) einen Gleichrichter (46), einen in Signalflussrichtung hinter dem Gleichrichter (46) angeordneten Integrator (48) und einen in Signalflussrichtung hinter dem Integrator (48) angeordneten Komparator (50), der ausgebildet ist, um an einem Ausgang ein von dem Überschreiten eines Schwellwerts durch seine Eingangsspannung abhängiges Signal zu liefern, aufweist.

**Claims**

**1.** A method of operating an optoelectronic sensor arrangement, preferably including at least one light grid (10), wherein

- a plurality of light transmitters (12) each transmit at least one light signal into a monitored zone, with the at least one light signal transmitted by a light transmitter (12) having a base modulation frequency which is associated with the respective light transmitter (12) and which is different from the base modulation frequency of the at least one light signal of at least one other light transmitter (12);

- the at least one light signal of a light transmitter (12) is respectively receivable by at least one light receiver (14) associated with this light transmitter (12);

- the received signal of the at least one light receiver (14) is evaluated by an evaluation device associated with the at least one light receiver (14); and

- an object determination signal is generated by the evaluation device in dependence on the received signal or on the received signals,

**characterised in that**
the evaluation device of the at least one light receiver (14) checks the received signal of the at least one light receiver (14) for the presence of the base modulation frequency of at least one light transmitter (12) with which the at least one light receiver (14) is associated **in that** it generates a local signal with an adjustable frequency by means of a signal generator; mixes the received signal with the local signal by means of a mixer stage (38), with a frequency $f_L$ of the local signal being set such that the frequency spacing between the frequency $f_L$ of the local signal and the base modulation frequency to be checked corresponds to a predefined reference frequency; and checks the mixed signal for the presence of the reference frequency.

2. A method in accordance with claim 1,
   **characterised in that**
   the plurality of light transmitters (12) of the optoelectronic sensor arrangement are spread over a plurality of light barriers or a plurality of light grids (10) or over any desired combination of one or more light barriers and one or more light grids (10), with a common base modulation frequency belonging to the respective light barrier or to the respective light grid (10) being associated with preferably all light transmitters (12) which belong to a specific light barrier or to a specific light grid (10) and with the base modulation frequency of all light grids (10) or of all light barriers of the optoelectronic sensor arrangement differing from one another.

3. A method in accordance with one of the preceding claims,
   **characterised in that**
   the plurality of light transmitters (12) transmit one or more transmission bursts as light signals which each have the base modulation frequency associated with the respective light transmitter (12).

4. A method in accordance with claim 3,
   **characterised in that**
   the evaluation device of the at least one light receiver (14) checks the received signal of the at least one light receiver (14) for the presence of the base modulation frequency of at least one light transmitter (12) with which the at least one light receiver (14) is associated within time intervals which are synchronised with time intervals in which the respective light transmitter (12) transmits transmission bursts.

5. A method in accordance with any one of the preceding claims,
   **characterised in that**
   at least one of the plurality of light transmitters (12) is acted on by a periodic modulation signal whose period duration corresponds to the base modulation frequency associated with the at least one light transmitter (12), with the periodic modulation signal preferably being a periodic rectangular signal or a signal comprising the positive half-waves of a sinusoidal signal.

6. A method in accordance with any one of the preceding claims,
   **characterised in that**
   the base modulation frequencies of all light transmitters (12) are selected and are associated with the light transmitters (12) so that the base modulation frequencies of all light transmitters (12) lie in a working frequency range and/or mutually different base modulation frequencies have a first predefined minimum frequency spacing from one another and/or a second predefined minimum frequency spacing from the multiples of all base modulation frequencies and/or a third predefined minimum frequency spacing from intermodulation product frequencies which result from the intermodulations of specific predefined orders of all base modulation frequencies.

7. An optoelectronic sensor arrangement, in particular having at least one light grid (10) and in particular for carrying out a method in accordance with any one of the claims 1 to 6, having

   - a plurality of light transmitters (12) by which a respective at least one light signal can be transmitted into a monitored zone such that the at least one light signal transmitted by a light transmitter (12) has a base modulation frequency which is associated with the respective light transmitter (12) and which is different from the base modulation frequency of the at least one light signal of at least one other light transmitter (12);

- at least one light receiver (14) which is designed for receiving the at least one light signal of at least one light transmitter (12); and

- an evaluation device which is associated with the at least one light receiver (14) and which is designed for evaluating the received signal of the at least one light receiver (14) as well as for generating an object determination signal in dependence on the received signal or on the received signals,

**characterised in that**
the evaluation device of the at least one light receiver (14) has a mixer stage (38) as well as a signal generator (40) connected to the mixer stage (38) for generating a local signal having an adjustable frequency, with the evaluation device being designed to check the received signal of the at least one light receiver (14) for the presence of the base modulation frequency of at least one light transmitter (12) **in that** the evaluation device generates a local signal having an adjustable frequency by means of the signal generator; mixes the received signal with the local signal by means of the mixer stage (38), with a frequency $f_L$ of the local signal being set such that the frequency spacing between the frequency $f_L$ of the local signal and of the base modulation frequency to be checked corresponds to a predefined reference frequency; and checks the mixed signal for the presence of the reference frequency.

8. An optoelectronic sensor arrangement in accordance with claim 7,
**characterised in that**
a respective one or more transmission bursts, which each have the base modulation frequency associated with the respective light transmitter (12), can be transmitted as light signals by each of the plurality of light transmitters (12).

9. An optoelectronic sensor arrangement in accordance with claim 7 or claim 8,
**characterised in that**
the plurality of light transmitters (12) of the optoelectronic sensor arrangement are spread over a plurality of light barriers or a plurality of light grids (10) or over any desired combination of one or more light barriers and one or more light grids (10), with a common base modulation frequency belonging to the respective light barrier or to the respective light grid (10) being associated with in particular all light transmitters (12) which belong to a specific light barrier or to a specific light grid (10) and with the base modulation frequency of all light grids (10) or of all light barriers differing from one another.

10. An optoelectronic sensor arrangement in accordance with any one of the claims 7 to 9,
**characterised in that**
at least one light transmitter (12) is connected to an excitation device (24) which applies a periodic modulation signal to the light transmitter (12) whose base frequency can be set, with the excitation device preferably having a DDS module (30) and/or a microcontroller with a clock.

11. An optoelectronic sensor arrangement in accordance with any one of the claims 7 to 10,
**characterised in that**
the evaluation device of the at least one light receiver (14) has a bandpass filter (36) connected to the output of the at least one light receiver (14), with the pass band of the bandpass filter (36) preferably including the base modulation frequency of all light transmitters.

12. An optoelectronic sensor arrangement in accordance with any one of the claims 7 to 11,
**characterised in that**
the evaluation device of the at least one light receiver (14) has an analogue/digital converter (60) and a digital logic module (62) which is configured for checking the received signal of the at least one light receiver (14) for the presence of the base modulation frequency of at least one light transmitter (12).

13. An optoelectronic sensor arrangement in accordance with any one of the claims 7 to 11,
**characterised in that**
the evaluation device of the at least one light receiver (14) has two separate signal paths each having a comparator (56, 58), with one of the comparators (56) being designed to deliver an output signal depending on the presence of a predefined reference frequency in its input signal to an output and with the other comparator (58) being designed to deliver an output signal depending on the amplitude of its input signal to an output.

**14.** An optoelectronic sensor arrangement in accordance with any one of the claims 7 to 11,
**characterised in that**
the evaluation device of the at least one light receiver (14) has a rectifier (46), an integrator (48) arranged behind the rectifier (46) in the signal flow direction and a comparator (50) which is arranged behind the integrator (48) in the signal flow direction and which is configured to deliver a signal depending on the exceeding of a threshold value by its input voltage to an output.


**Revendications**

**1.** Procédé pour le fonctionnement d'un agencement capteur optoélectronique, comprenant de préférence au moins une grille lumineuse (10), dans lequel

- plusieurs émetteurs de lumière (12) émettent chacun au moins un signal lumineux dans une zone de surveillance, ledit au moins un signal lumineux émis par un émetteur de lumière (12) présentant une fréquence de modulation de base associée à l'émetteur de lumière respectif (12), laquelle est différente de la fréquence de modulation de base dudit au moins un signal lumineux d'au moins un autre émetteur de lumière (12),
- ledit au moins un signal lumineux d'un émetteur de lumière (12) peut être reçu respectivement par au moins un récepteur de lumière (14) associé à cet émetteur de lumière (12),
- le signal reçu par ledit au moins un récepteur de lumière (14) est évalué par une unité d'évaluation associée audit au moins un récepteur de lumière (14), et
- un signal de constatation d'objet est engendré par l'unité d'évaluation en fonction du signal reçu ou des signaux reçus

**caractérisé en ce que**
l'unité d'évaluation dudit au moins un récepteur de lumière (14) vérifie le signal reçu dudit au moins un récepteur de lumière (14) quant à la présence de la fréquence de modulation de base d'au moins un émetteur de lumière (12) auquel est associé ledit au moins un récepteur de lumière (14), du fait qu'elle engendre au moyen d'un générateur de signaux un signal local avec une fréquence réglable, elle mélange le signal reçu avec le signal local au moyen d'un étage de mélange (38), en établissant une fréquence $f_L$ du signal local de telle façon que l'écart de fréquence entre la fréquence $f_L$ du signal local et la fréquence de modulation de base à vérifier corresponde à une fréquence de référence prédéterminée, et le signal mélangé est vérifié quant à la présence de la fréquence de référence.

**2.** Procédé selon la revendication 1,
**caractérisé en ce que** les plusieurs émetteurs de lumière (12) de l'agencement capteur optoélectronique sont subdivisés en plusieurs barrières lumineuses ou plusieurs grilles lumineuses (10) ou une combinaison quelconque d'une ou plusieurs barrières lumineuses et d'une ou plusieurs grilles lumineuses (10), dans lequel on associe de préférence à tous les émetteurs de lumière (12), qui appartiennent à une barrière lumineuse déterminée ou à une grille lumineuse déterminée (10), une fréquence de modulation de base commune associée à la barrière lumineuse respective ou à la grille lumineuse respective (10), et les fréquences de modulation de base de toutes les grilles lumineuses (10) ou respectivement de toutes les barrières lumineuses de l'agencement capteur optoélectronique diffèrent les unes des autres.

**3.** Procédé selon l'une des revendications précédentes,
**caractérisé en ce que** les plusieurs émetteurs de lumière (12) émettent à titre de signaux lumineux respectivement une ou plusieurs salves d'émission qui présentent chacune la fréquence de modulation de base associée à l'émetteur de lumière respectif (12).

**4.** Procédé selon la revendication 3,
**caractérisé en ce que** l'unité d'évaluation dudit au moins un récepteur de lumière (14) vérifie le signal reçu dudit au moins un récepteur de lumière (14) à l'intérieur d'intervalles temporels quant à la présence de la fréquence de modulation de base d'au moins un émetteur de lumière (12) auquel est associé au moins un récepteur de lumière (14), qui sont synchronisés avec des intervalles temporels dans lesquels l'émetteur de lumière respectif (12) émet des salves d'émission.

**5.** Procédé selon l'une des revendications précédentes,
**caractérisé en ce que** l'un au moins des plusieurs émetteurs de lumière (12) est attaqué avec un signal de modulation périodique dont la durée de période correspond à la fréquence de modulation de base associée audit au moins un émetteur de lumière (12), dans lequel le signal de modulation périodique est de préférence un signal périodique rectangulaire ou un signal constitué par les demi-ondes positives d'un signal sinusoïdal.

**6.** Procédé selon l'une des revendications précédentes, **caractérisé en ce que** la fréquence de modulation de base de tous les émetteurs de lumière (12) est choisie de telle manière et associée aux émetteurs de lumière (12) de telle façon que les fréquences de modulation de base de tous les émetteurs de lumière (12) sont situées dans une plage de fréquences de travail et/ou **en ce que** les fréquences de modulation de base mutuellement différentes présentent une première distance de fréquence minimum prédéterminée les unes par rapport aux autres et/ou une seconde distance de fréquence minimum prédéterminée par rapport aux multiples de toutes les fréquences de modulation de base et/ou une troisième distance de fréquence minimum prédéterminée par rapport aux fréquences des produits d'intermodulation qui résultent des intermodulations de certains ordres prédéterminés de toutes les fréquences de modulation de base.

**7.** Agencement capteur optoélectronique, comprenant en particulier au moins une grille lumineuse (10), et en particulier pour la mise en oeuvre d'un procédé selon l'une des revendications 1 à 6, comprenant

- plusieurs émetteurs de lumière (12) avec lesquels au moins un signal lumineux peut être respectivement émis dans une zone de surveillance de telle façon que ledit au moins un signal lumineux émis par un émetteur de lumière (12) présente une fréquence de modulation de base associée à l'émetteur de lumière respective (12), laquelle diffère de la fréquence de modulation de base dudit au moins un signal lumineux d'au moins un autre émetteur de lumière (12),
- au moins un récepteur de lumière (14), qui est réalisé pour recevoir ledit au moins un signal lumineux d'au moins un émetteur de lumière (12), et
- une unité d'évaluation associée audit au moins un récepteur de lumière (14), laquelle est réalisée pour évaluer le signal reçu dudit au moins un récepteur de lumière (14) et pour générer un signal de constatation d'objet en fonction du signal reçu ou des signaux reçus **caractérisé en ce que**

l'unité d'évaluation dudit au moins un récepteur de lumière (14) comprend un étage de mélange (38) ainsi qu'un générateur de signaux (40) connecté à l'étage de mélange (38) pour générer un signal local avec une fréquence réglable, dans lequel l'unité d'évaluation est réalisée pour vérifier le signal reçu dudit au moins un récepteur de lumière (14) quant à la présence de la fréquence de modulation de base d'au moins un émetteur de lumière (12), du fait que l'unité d'évaluation engendre au moyen de générateur de signaux un signal local avec une fréquence réglable, elle mélange le signal reçu avec le signal local au moyen de l'étage de mélange (38), et une fréquence $f_L$ du signal local est réglée de telle façon que l'écart de fréquence entre la fréquence $f_L$ du signal local et la fréquence de modulation de base à vérifier corresponde à une fréquence de référence prédéterminée, et elle vérifie le signal mélangé quant à la présence de la fréquence de référence.

**8.** Agencement capteur optoélectronique selon la revendication 7, **caractérisé en ce que**, au moyen de chacun des plusieurs émetteurs de lumière (12) il est possible d'émettre à titre de signaux lumineux respectivement une ou plusieurs salves d'émission, qui présentent respectivement la fréquence de modulation de base associée à l'émetteur de lumière respectif (12).

**9.** Agencement capteur optoélectronique selon la revendication 7 ou 8, **caractérisé en ce que** les plusieurs émetteurs de lumière (12) de l'agencement capteur optoélectronique sont subdivisés en plusieurs barrières lumineuses ou plusieurs grilles lumineuses (10) ou une combinaison quelconque d'une ou plusieurs barrières lumineuses et d'une ou plusieurs grilles lumineuses (10), dans lequel en particulier une fréquence de modulation de base commune, appartenant à la barrière lumineuse respective ou à la grille lumineuse respective (10), est associée à tous les émetteurs de lumière (12) qui appartiennent à une barrière lumineuse déterminée ou à une grille lumineuse déterminée (10), et dans lequel les fréquences de modulation de base de toutes les grilles lumineuses (10) et de toutes les barrières lumineuses diffèrent les unes des autres.

**10.** Agencement capteur optoélectronique selon l'une des revendications 7 à 9, **caractérisé en ce qu'**au moins un émetteur de lumière (12) est connecté à un dispositif d'excitation (24) qui attaque l'émetteur de lumière (12) avec un signal de modulation périodique dont la fréquence de base est réglable, et le dispositif d'excitation comprend de préférence un composant DDS (30) et/ou un microcontrôleur avec une horloge.

**11.** Agencement capteur optoélectronique selon l'une des revendications 7 à 10, **caractérisé en ce que** l'unité d'évaluation dudit au moins un récepteur de lumière (14) comprend un filtre passe-bande (36) branché à la sortie dudit au moins un récepteur de lumière (14), et la plage passante du filtre passe-bande (36) comprend de préférence les fréquences de modulation de base de tous les émetteurs de lumière.

12. Agencement capteur optoélectronique selon l'une des revendications 7 à 11, **caractérisé en ce que** l'unité d'évaluation dudit au moins un récepteur de lumière (14) comprend un convertisseur analogique/numérique (60) et un composant logique numérique (62) qui est configuré pour vérifier le signal reçu dudit au moins un récepteur de lumière (14) quant à la présence de la fréquence de modulation de base d'au moins un émetteur de lumière (12).

13. Agencement capteur optoélectronique selon l'une des revendications 7 à 11, **caractérisé en ce que** l'unité d'évaluation dudit au moins un récepteur de lumière (14) présente deux trajets séparés pour les signaux comprenant chacun un comparateur (56, 58), dans lesquels un des comparateurs (56) est réalisé pour fournir à une sortie un signal de sortie dépendant de la présence d'une fréquence de référence prédéterminée dans son signal d'entrée, et l'autre comparateur (58) est réalisé pour fournir à une sortie un signal de sortie dépendant de l'amplitude de son signal d'entrée.

14. Agencement capteur optoélectronique selon l'une des revendications 7 à 11, **caractérisé en ce que** l'unité d'évaluation dudit au moins un récepteur de lumière (14) comprend un redresseur (46), un intégrateur (48) agencé derrière le redresseur (46) dans la direction du flux des signaux, et un comparateur (50), agencé derrière l'intégrateur (48) dans la direction du flux des signaux, qui est réalisé pour fournir à une sortie un signal dépendant du dépassement d'une valeur seuil par sa tension d'entrée.

## Fig. 1

## Fig. 2

## Fig. 3

## Fig. 4

## Fig. 5a

Fig. 5b

Fig. 6

**EP 2 230 538 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1118881 B1
- DE 1566741 A1
- DE 2539438 A1
- GB 2423241 A
- WO 2006044758 A2